# EUROPÄISCHE PATENTSCHRIFT

(11) **EP 3 253 894 B1**
(45) Veröffentlichungstag und Bekanntmachung des Hinweises auf die Patenterteilung: **16.12.2020**
(21) Anmeldenummer: 16706143.1
(22) Anmeldetag: 03.02.2016
(51) Int. Cl.: C21D 9/32, C21D 9/34, C21D 9/40, F27D 3/00

(54) **CHARGIEREINRICHTUNG FÜR DIE WÄRMEBEHANDLUNG VON WERKSTÜCKEN MIT EINER NABE**
CHARGING DEVICE FOR THE HEAT TREATMENT OF WORKPIECES HAVING A HUB
DISPOSITIF DE CHARGEMENT POUR LE TRAITEMENT THERMIQUE DE PIÈCES POURVUES D'UN MOYEU

(30) Priorität: 05.02.2015 DE 102015101654
(43) Veröffentlichungstag der Anmeldung: 13.12.2017
(73) Patentinhaber: Härterei Reese Bochum GmbH, 44807 Bochum (DE)
(72) Erfinder: REESE, Gerhard, 44807 Bochum (DE); STADTLER, Thorsten, 44879 Bochum (DE)
(74) Vertreter: Thiel, Christian
(86) Internationale Anmeldenummer: PCT/EP2016/052303
(87) Internationale Veröffentlichungsnummer: WO 2016/124654

(56) Entgegenhaltungen:
- GB-A- 303 196
- US-A- 1 704 327
- US-A- 1 768 159
- US-A- 2 067 549
- US-A- 6 030 471

## Beschreibung

Die Erfindung betrifft eine Chargiereinrichtung für die Wärmehandlung von Werkstücken, die eine Nabe aufweisen, mit einem Chargierbock, einer Welle und wenigstens einer Hilfsnabe.

Die Wärmebehandlung von aus Stahl gefertigten Werkstücken (u. a. auch Zahnrädern) dient dem Zweck, die Verschleiß- und Festigkeitseigenschaften der behandelten Werkstücke zu verbessern. Dazu werden die Werkstücke in Ofenanlagen auf Temperaturen zwischen 700° C und 1.000° C erwärmt und im sogenannten austenitisierten Zustand rasch abgekühlt. Die Abkühlung erfolgt üblicherweise in flüssigen Abschreckmedien wie beispielsweise Öl oder Polymerlösungen.

Während der Abkühlung der austenitisierten Zahnräder im flüssigen Abschreckmedium beginnt dieses an den heißen Werkstückoberflächen zu sieden und eine Dampfschicht aufzubauen. Diese Dampfschicht, auch Dampfhaut genannt, beeinflusst die Abkühlgeschwindigkeit des Werkstücks stark. Daher wird versucht, die Dampfhautbildung so gering wie möglich zu halten, um eine gleichmäßigere Abkühlung der Werkstücke zu erzielen. Dies wird teilweise erreicht durch gleichmäßige Umwälzung des Abschreckmediums oder/und Bewegung der Werkstücke im Abschreckmedium. Nach dem Abschrecken werden die Werkstücke auf Temperaturen innerhalb der sogenannten Anlassstufen erwärmt und erhalten so die geforderte Festigkeit bzw. Härte.

Zahnräder mit Außendurchmessern kleiner etwa 400 mm werden üblicherweise horizontal auf Standard-Chargiergestellen positioniert und so dem oben beschriebenen Wärmebehandlungsprozess zugeführt. Bei Zahnrädern mit Außendurchmessern größer 400 mm führt die horizontale Chargiertechnik allerdings zu Planlauffehlern (Planschlag) und einer konisch veränderten Verzahnung. Dieses Formänderungsverhalten ist zum einen auf die punktuelle Auflage des Zahnrades auf dem Chargiergestell und zum anderen auf die unterschiedlichen Abkühlgeschwindigkeiten zwischen der oberen und der unteren Planfläche des Zahnrades bei der Abschreckung zurückzuführen.

Während an der Oberseite des Zahnrades der Dampf innerhalb des Abschreckmediums nach oben steigen kann, bilden sich an der Unterseite des Zahnrades große Mengen an Dampf, die nicht nach oben entweichen können und daher die Abkühlung auf dieser Seite des Zahnrades verlangsamen. Diese unterschiedliche Abkühlung verursacht Spannungen innerhalb des Zahnrades, die sich durch die oben beschriebene Formänderung äußern. Planlauffehler und Konizität der Verzahnung verursachen erhöhten Schleifaufwand bei der Endbearbeitung der Zahnräder, die sich an die Wärmebehandlung anschließt. In ungünstigen Fällen wird bei der durch die Formänderung hervorgerufenen mechanischen Nachbearbeitung ein Großteil der durch die Wärmebehandlung erzielten Härtetiefe wieder abgearbeitet. Im Extremfall ist die Formänderung derart stark ausgeprägt, dass auch durch eine mechanische Nachbearbeitung das Zahnrad nicht mehr verwendbar gemacht werden kann. Das Zahnrad ist dann Ausschuss und muss verschrottet werden. Aufgrund der beschriebenen Problematik ist es daher branchenüblich, Zahnräder vertikal hängend zu chargieren. Dazu wird üblicherweise das Zahnrad in der Nabenbohrung aufgehängt.

Diese Methode ist allerdings nur möglich sofern die Geometrie des Zahnrades dies zulässt. Sobald der Nabendurchmesser des Zahnrades mehr als ca. 25 % des Außendurchmessers beträgt, besteht die Gefahr, dass sich das Zahnrad während der Wärmebehandlung oval verformt. Dieses Formänderungsverhalten nimmt mit zunehmenden Zahnraddurchmessern und -gewichten weiter zu. Ovalität lässt sich durch mechanische Nachbearbeitung nur in geringem Maße reduzieren und ist daher noch problematischer als Planlauffehler oder Konizität. Aus der GB-A 303196 und der US-A 1768159 sind Chargiereinrichtungen zur drehbaren Lagerung eines Zahnrads mit einer Hilfsnabe bekannt. Die US-A 2067549 beschreibt eine Vorrichtung zum Härten des Zahnkranzes eines Zahnrads auf einen Chargierbock.

Aufgabe der Erfindung ist die Bereitstellung einer Einrichtung und eines Verfahrens, mit der die oben geschilderten Nachteile, insbesondere das Auftreten von Planlauffehlern und einer konisch veränderten Verzahnung, vermieden werden kann. Gleichzeitig sollen die Einrichtung und das Verfahren eine rationelle Chargierung und Wärmebehandlung von Werkstücken ermöglichen.

Diese Aufgabe wird mit einer Chargiereinrichtung der eingangs genannten Art gelöst, bei der das Werkstück mittels der in die Nabe passgenau eingepassten Hilfsnabe(n) vertikal auf der Welle gelagert werden kann und sich die Welle während der Wärmebehandlung auf dem Chargierbock abstützt, wobei die Hilfsnabe(n) scheibenförmig ausgebildet und an die Nabe angepasst oder den eh peripher angeordnete Stellelemente anpassbar sind, wobei das Werkstück einen Nabendurchmesser von mehr als 20 % des Werkstückdurchmessers aufweist.

Die erfindungsgemäße Chargiereinrichtung ist für alle Werkstücke mit einer Nabe geeignet, bei denen das Gewicht des Werkstücks und die Größe der Nabe dazu führen können, dass sich das Werkstück bei der Wärmebehandlung, insbesondere beim Härten, unerwünscht verformt. Die Einrichtung ist insbesondere für das Härten von großen Zahnrädern geeignet, d. h. bei Zahnrädern, die einen Außendurchmesser von mehr als 400 mm haben und deren Nabenöffnung 20 % des Außendurchmessers übersteigt. Bei derartigen Werkstücken ist die Gefahr, dass beim Härten durch ihr Eigengewicht eine unerwünschte Verformung erleiden, besonders groß.

Die erfindungsgemäße Chargiereinrichtung besteht im Prinzip aus drei Komponenten, einem Chargierbock, einer Welle und wenigstens einer Hilfsnabe. Die Hilfsnabe wird passgenau in das Werkstück eingesetzt, so dass das Werkstück vertikal auf der Welle gelagert werden kann. Die Welle selbst stützt sich während der Wärmebehandlung auf dem Chargierbock ab.

Zweckmäßigerweise werden in das Werkstück zwei Hilfsnaben eingepasst, die scheibenförmig ausgebildet sind. Bei scheibenförmiger Ausbildung der Hilfsnaben entspricht der Außendurchmesser der Scheibe dem Durchmesser der Nabe des Werkstücks. Scheibenförmige Hilfsnaben müssen nach der Größe der Werkstücknabe ausgewählt werden oder über peripher angeordnete Stellelemente an den jeweiligen Nabendurchmesser des Werkstücks angepasst werden. Geeignete Stellelemente sind beispielsweise Schraubdorne.

Vom Prinzip her stützen die Hilfsnaben das Werkstück über ihren gesamten Umfang ab. Eine ovale Verformung des Werkstücks beim Härten durch die Schwerkraft ist dadurch nicht mehr möglich. Vielmehr wird das Werkstück in der fixierten Position in allen Richtungen stabilisiert.

Die Erfindungsgemäße Chargiereinrichtung ist vor allem bestimmt für Werkstücke, die einen Nabendurchmesser von mehr als 20 % des Werkstückdurchmessers haben, wobei der Werkstückdurchmesser in der Regel größer ist als 400 mm. Es ist ohne weiteres möglich, auch Werkstücke zu behandeln, die einen Außendurchmesser von mehr als 2.000 mm aufweisen, bei einem Nabendurchmesser von 400 mm und mehr.

Die Teile der Chargiereinrichtung bestehen in der Regel aus einem hitzebeständigen Stahl, die Naben beispielsweise aus einem Baustahl oder Einsatzstahl.

Um die Belastung der Welle niedrig zu halten, ist es zweckmäßig, zwei scheibenförmige Hilfsnaben einzusetzen. Dabei können die Hilfsnaben als Speichenräder ausgebildet sein. Die Hilfsnaben werden randständig auf beiden Seiten der Werkstücksnaben angepasst. Sie können über Spannelemente auf der Welle in ihrer Position fixiert werden. Eine andere Fixierungsmöglichkeit ist über Verbindungsstreben.

Für eine gleichmäßige Wärmebeaufschlagung kann es sinnvoll sein, das Werkstück in der Chargiereinrichtung zu drehen. Dies ist ohne weiteres über eine angetriebene Welle möglich, wobei der Antrieb der Welle beispielsweise über ein Zahngetriebe erfolgen kann. Ein auf die Welle wirkendes Zahngetriebe hat den Vorteil, dass das an der Welle hängende Werkstück ohne großen Aufwand in die Chargiereinrichtung eingebracht und wieder entnommen werden kann.

Die Erfindung betrifft ferner ein Verfahren zum formstabilen Härten von Werkstücken mit einer Nabe, insbesondere von Zahnrädern, in einer Chargiereinrichtung, wie sie vorstehend beschrieben ist. Das Verfahren umfasst die Schritte
- Einpassen wenigstens einer Hilfsnabe in die Nabe des Werkstücks,
- Einhängen des Werkstücks an einer Welle in einen Chargierbock, wobei das Werkstück vertikal ausgerichtet ist,
- Beaufschlagen des Werkstücks mit Wärme, ggf. unter Schutzgas oder Prozessgas, über eine gewünschte Zeitspanne,
- Abkühlen des Werkstücks in einem üblichen Kühlmedium und
- gegebenenfalls Anlassen des Werkstücks.

Es ist zweckmäßig, die Welle anzutreiben, um auf diese Art und Weise eine noch geringere Verformung des Werkstücks zu erreichen.

Schließlich betrifft die Erfindung die Verwendung von Hilfsnaben zum formstabilen Härten von Zahnrädern in vertikaler Position.

Bei der Durchführung des Verfahrens wird zunächst das Hilfsnabenkonstrukt mit der Welle in die Nabe des Werkstücks eingepasst. Das Werkstück wird sodann mit Hilfe einer Traverse auf den Chargierbock gehoben und in dieser Position im Ofen für die übliche Zeit wärmebehandelt. Für das Vergüten von Werkstücken sind in der Regel Temperaturen von etwa 850° C vorgesehen, je nach Material. Die Vergütungszeit beträgt nach dem Aufwärmen je nach Material und Querschnitt mehrere Stunden, wonach das Werkstück abgeschreckt und anschließend angelassen wird. Das Werkstück wird auf diese Art und Weise auf die geforderte Festigkeit vergütet. Beim Einsatzhärten liegt die Temperatur im Bereich von 930 bis 980° C. Üblicherweise wird Schutzgas eingesetzt, insbesondere ein kohlenstoffhaltiges Schutzgas. Die Dauer der Wärmebehandlung liegt im üblichen Bereich und kann, je nach gewünschter Einsatzhärtungstiefe 200 Stunden und mehr betragen. Auch beim Einsatzhärten wird das Werkstück im Anschluss daran abgeschreckt, beispielsweise in einem Öl- oder Polymerbad.

In einem erfindungsgemäßen Chargiergestell und nach dem erfindungsgemäßen Verfahren wurden erfolgreich Zahnräder mit einem Außendurchmesser von 3.200 mm vergütet bzw. gehärtet.

Je nach gewünschter Wiederverwendbarkeit können die Hilfsnaben aus einfachem Baustahl oder aber aus einem hochhitzebeständigen Stahl gefertigt sein. Die Hilfsnaben werden jeweils von außen in die Nabe des Zahnrades eingesetzt und reduzieren so, aufgrund ihrer Geometrie, den Nabendurchmesser, an dem das Zahnrad für die Wärmebehandlung aufgehängt wird. Das Zahnrad lagert folglich auf den eingesetzten Hilfsnaben, die für eine gleichmäßigere Lastverteilung sorgen. Eine Formänderung des Zahnrades in Bezug auf Planlauffehler, Konizität und Ovalität ist so auf ein Minimum reduziert.

Die Erfindung wird in den beiliegenden Abbildungen näher erläutert. Es zeigen:
- Fig. 1: ein Zahnrad in der Draufsicht und im Querschnitt, wie es erfindungsgemäß gehärtet werden kann;
- Fig. 2: eine erfindungsgemäße Chargiereinrichtung mit eingehängter Welle und aufgezogenem Zahnrad Ansicht;
- Fig. 3: die Chargiereinrichtung von Fig. 2 mit eingehängter Traverse zum Transport des Zahnrades, und
- Fig. 4: ein Beispiel einer anpassbaren Hilfsnabe.

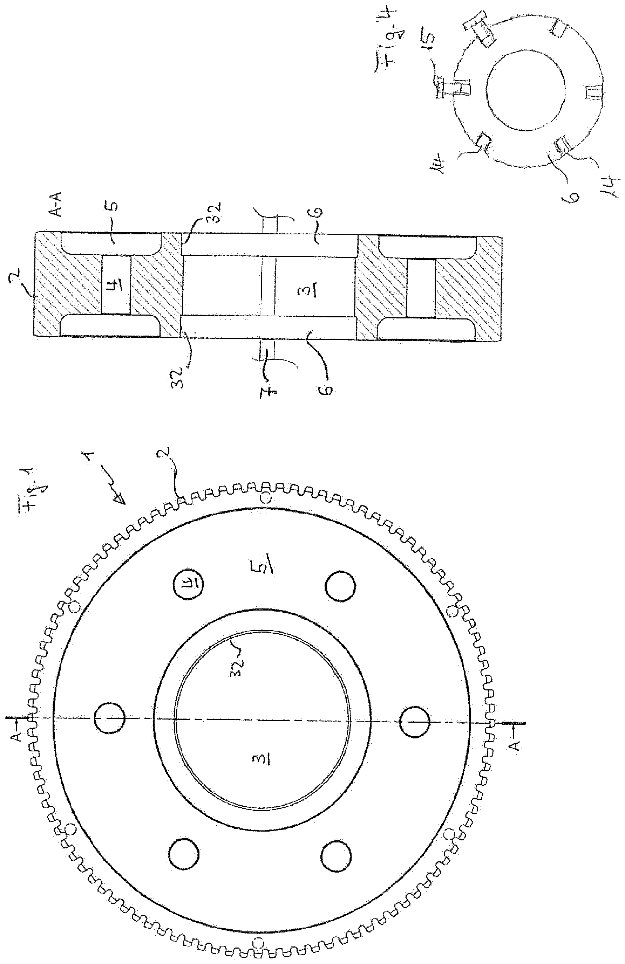

Fig. 1 zeigt ein Zahnrad, wie es erfindungsgemäß gehärtet werden kann, mit einem Durchmesser von 2.900 mm und einer Nabenöffnung von 1.080 mm. Das Zahnrad weist den üblichen Zahnkranz 2 und eine Nabe 3 auf sowie Bohrungen 4, die gleichmäßig über den Umfang verteilt sind. Die Bohrungen 4 befinden sich in einem Bereich des Zahnrades, der gegenüber den Zahnkranz und dem Innenrand aus Gewichtsersparnisgründen eingetieft ist.

Wie in der Schnittzeichnung A-A (mit Hilfsnaben und Welle) dargestellt, gliedert sich die Nabe 3 in einen zentralen Abschnitt 31 und zwei periphere Abschnitte 32, welche gegenüber dem zentralen Abschnitt geringfügig erweitert sind. Es handelt sich um Einfräsungen, in die die Hilfsnaben 6 eingesetzt sind. Solche Einfräsungen sind hilfreich und verbessern den Sitz der Hilfsnaben 6, sind aber für das erfindungsgemäße Verfahren und die erfindungsgemäße Einrichtung nicht essentiell. Die Hilfsnaben 6 werden in beide periphere Abschnitte 32 eingepasst und können durch Streben miteinander verbunden werden oder durch Spannelemente auf der Welle 7 der Einrichtung in ihrer Position fixiert werden.

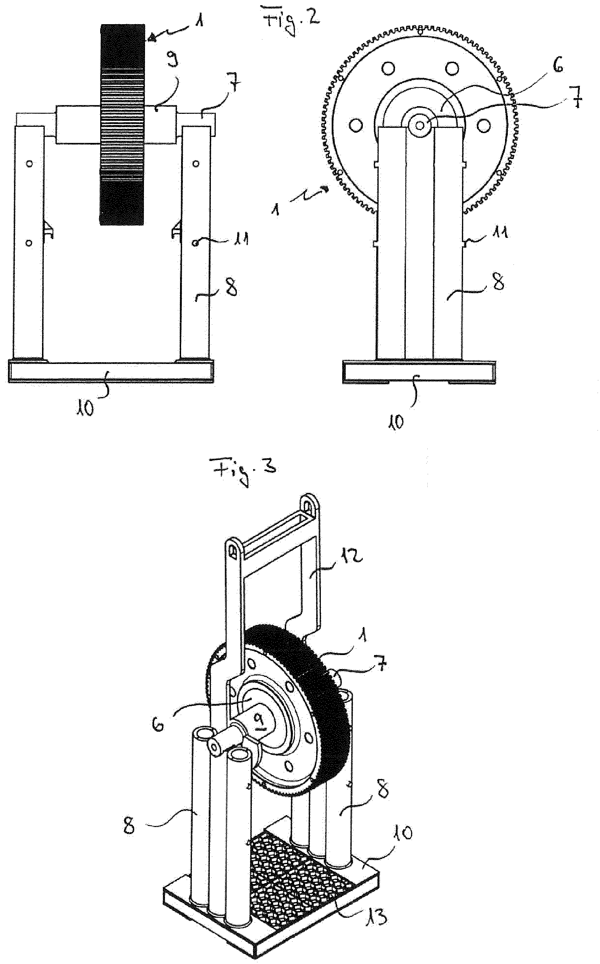

Fig. 2 zeigt eine erfindungsgemäße Chargiereinrichtung mit eingehängtem Zahnrad 1 in frontaler und seitlicher Ansicht. Das Zahnrad 1 ist mittels zweier Hilfsnaben 6, die auf beiden Seiten in die Außenabschnitte 32 (siehe Fig. 1) der Nabe 3 eingepasst sind, auf der Welle 7 festgelegt. Die Hilfsnabenscheiben 6 sind passgenau in die Zahnradnabe 3 eingepasst, die Welle 7 passgenau in die Hilfsnaben 6.

Die Welle 7 weist angrenzend an die Hilfsnabenscheiben 6 Spannelemente 9 auf, die zum einen auf der Welle 7 fixiert sind und zum anderen die Hilfsnaben 6 in ihrer Position fixieren.

Der Chargierbock 8 weist auf jeder Seite drei linear nebeneinander angeordnete Rohre auf, deren mittleres geringfügig niedriger ausfällt, als die beiden randständigen. Zweckmäßigerweise ist das mittlere Rohr zur Aufnahme der Welle 7 gerundet eingetieft. Die Rohre sind durch hindurchgesteckte Verbinder 11a ineinander gesichert. Eine Bodenplatte 10 dient als Standfläche und kann zwecks Beaufschlagung des Zahnrades mit Heißluft im Zentrum zwischen den Rohren als Rost ausgebildet sein.

Grundsätzlich kann jegliche Form von Chargierbock mit zwei Auflagern für die Welle verwandt werden.

Fig. 3 zeigt die Chargiereinrichtung von Fig. 2 mit dem Zahnrad 1, der Welle 7, dem Bock 8, der Bodenplatte 10 sowie einer Traverse 12, die zum Transport des in die Welle 7 eingehängten Zahnrades 1 dient. Mit der Traverse 12 wird das Zahnrad in den Chargierbock gehängt, aus diesem wieder entnommen und in das Abschreckbad eingeführt. Bei solchen Traversen handelt es sich um gebräuchliche Hebewerkzeuge.

Die in Fig. 2 und Fig. 3 dargestellte Welle 7 kann als Spannachse ausgebildet sein, die die Hilfsnaben, die in dem Zahnrad 1 in den erweiterten Abschnitten 31 und 32 eingesetzt sind, gegen ein Herausrutschen fixiert. Hierzu weist Welle 7 im an das Zahnrad 1 angrenzenden Bereich einen Bereich erweiterten Umfangs auf, der gegen die Hilfsnaben 6 verspannt ist und gegen ein Verrutschen gesichert ist. Es versteht sich, dass die Hilfsnaben eine konische Form aufweisen können, wobei diese Konusse auf der Welle 7 gegen die Nabe 3 des Zahnrades 1 geschoben werden, das Zahnrad zwischen sich zentrieren und in dieser Position an der Welle 7 gesichert werden.

Fig. 4 zeigt eine an den Durchmesser einer Zahnradnabe anpassbare Hilfsnabe 6, die peripher sechs Gewindebohrungen 14 aufweist, in die Schrauben 15 höhenverstellbar eingeschraubt werden. Die Hilfsnabe 6 stützt sich an den Köpfen der Schrauben 15 im Bereich der Nabe des Zahnrads gegen das Zahnrad ab.

## Patentansprüche

1. Chargiereinrichtung für die Wärmebehandlung von Werkstücken, die eine Nabe (3) aufweisen, mit einem Chargierbock (8), einer Welle (7) und wenigstens einer Hilfsnabe (6), wobei das Werkstück (1) mittels der in die Nabe (3) passgenau eingepassten Hilfsnabe(n) (6) vertikal auf der Welle (7) gelagert werden kann und sich die Welle (7) auf dem Chargierbock (8) abstützt, **dadurch gekennzeichnet, dass** die Hilfsnabe(n) (6) scheibenförmig ausgebildet und an die Nabe (3) angepasst oder durch peripher angeordnete Stellelemente anpassbar sind, wobei das Werkstück (1) einen Nabendurchmesser von mehr als 20 % des Werkstückdurchmessers aufweist.

2. Chargiereinrichtung nach Anspruch 1, **dadurch gekennzeichnet, dass** das Werkstück (1) ein Zahnrad ist.

3. Chargiereinrichtung nach Anspruch 1 oder 2, **dadurch gekennzeichnet, dass** sie zwei Hilfsnaben (6) aufweist.

4. Chargiereinrichtung nach einem der vorstehenden Ansprüche aus hitzebeständigem Stahl.

5. Chargiereinrichtung nach einem der vorstehenden Ansprüche, **dadurch gekennzeichnet, dass** die Welle (7) angetrieben ist.

6. Chargiereinrichtung nach einem der vorstehenden Ansprüche, **dadurch gekennzeichnet, dass** der Chargierbock (8) zwei Auflager aufweist.

7. Verfahren zum formstabilen Wärmebehandeln von Werkstücken (1) mit einer Nabe (3), insbesondere von Zahnrädern, mit den Schritten
- Einpassen wenigstens einer Hilfsnabe (6) in die Nabe (3) des Werkstücks, wobei die Hilfsnabe(n) (6) scheibenförmig ausgebildet und an die Nabe (3) angepasst oder durch peripher angeordnete Stellelemente anpassbar sind und das Werkstück (1) einen Nabendurchmesser von mehr als 20 % des Werkstückdurchmessers aufweist,
- Einhängen des Werkstücks (1) an einer Welle (7) in einen Chargierbock (8), wobei das Werkstück (1) vertikal ausgerichtet ist,
- Beaufschlagen des Werkstücks (1) mit Wärme über eine gewünschte Zeitspanne,
- Abkühlen des Werkstücks (1) in einem üblichen Kühlmedium und
- gegebenenfalls Anlassen des Werkstücks (1).

8. Verfahren nach Anspruch 7, **dadurch gekennzeichnet, dass** die Welle (7) angetrieben wird.

9. Verwendung einer oder mehrerer Hilfsnaben (6) zum formstabilen Härten von Zahnrädern (1) in vertikaler Position in einer Chargiereinrichtung nach einem der Ansprüche 1 bis 6.

## Claims

1. A charging device for the heat treatment of workpieces having a hub (3), comprising a charging support (8), a shaft (7) and at least one auxiliary hub (6), wherein the workpiece (1) can be vertically supported on the shaft (7) by means of the auxiliary hub(s) (6) precisely fitted into the hub (3), and the shaft (7) is supported on the charging support (8), **characterised in that** the auxiliary hub(s) (6) are of disc shape and are adapted to suit the hub (3) or can be adapted by means of peripherally arranged adjusting elements, wherein the workpiece (1) has a hub diameter of more than 20% of the workpiece diameter.

2. The charging device according to claim 1, **characterised in that** the workpiece (1) is a gearwheel.

3. The charging device according to claim 1 or 2, **characterised in that** it has two auxiliary hubs (6).

4. The charging device according to one of the preceding claims made of heat resistant steel.

5. The charging device according to one of the preceding claims, **characterised in that** the shaft (7) is driven.

6. The charging device according to one of the preceding claims, **characterised in that** the charging support (8) has two abutment structures.

7. A method for the heat treatment of workpieces (1) having a hub (3), in particular of gearwheels, such that they remain dimensionally stable, comprising the steps of
- fitting at least one auxiliary hub (6) into the hub (3) of the workpiece, wherein the auxiliary hub(s) (6) are of disc shape and are adapted to suit the hub (3) or can be adapted by means of peripherally arranged adjusting elements, and the workpiece (1) has a hub diameter of more than 20% of the workpiece diameter,
- suspending the workpiece (1) on a shaft (7) in a charging support (8), with the workpiece (1) being positioned vertically,
- applying heat to the workpiece (1) over a desired period of time,
- quenching the workpiece (1) in a customary cooling medium and
- optionally tempering the workpiece (1).

8. The method according to claim 7, **characterised in that** the shaft (7) is driven.

9. Use of one or more auxiliary hubs (6) for the hardening of gearwheels (1) in a vertical position in a charging device according to one of claims 1 to 6 such that they remain dimensionally stable.

## Revendications

1. Dispositif de chargement pour le traitement thermique de pièces, qui comportent un moyeu (3), comprenant un chevalet de chargement (8), un arbre (7) et au moins un moyeu auxiliaire (6), la pièce (1) pouvant être logée verticalement sur l'arbre (7) au moyen du/des moyeu(x) auxiliaire(s) (6) ajustés avec précision dans le moyeu (3) et l'arbre (7) s'appuyant sur le chevalet de chargement (8), **caractérisé en ce que** le/les moyeu(x) auxiliaire(s) (6) sont réalisés en forme de disque et sont adaptés, ou peuvent être adaptés par des éléments de réglage disposés de manière périphérique, au moyeu (3), la pièce (1) présentant un diamètre de moyeu de plus de 20 % du diamètre de la pièce.

2. Dispositif de chargement selon la revendication 1, **caractérisé en ce que** la pièce (1) est une roue dentée.

3. Dispositif de chargement selon la revendication 1 ou 2, **caractérisé en ce qu'**il comporte deux moyeux auxiliaires (6).

4. Dispositif de chargement selon l'une des revendications précédentes, constitué d'acier résistant à la chaleur.

5. Dispositif de chargement selon l'une des revendications précédentes, **caractérisé en ce que** l'arbre (7) est entraîné.

6. Dispositif de chargement selon l'une des revendications précédentes, **caractérisé en ce que** le chevalet de chargement (8) comporte deux supports.

7. Procédé de traitement thermique, avec stabilité de forme, de pièces (1) pourvues d'un moyeu (3), en particulier de roues dentées, comprenant les étapes
- ajustement d'au moins un moyeu auxiliaire (6) dans le moyeu (3) de la pièce, le/les moyeu(x) auxiliaire(s) (6) étant réalisés en forme de disque et étant adaptés, ou pouvant être adaptés par des éléments de réglage disposés de manière périphérique, au moyeu (3) et la pièce (1) présentant un diamètre de moyeu de plus de 20 % du diamètre de la pièce,
- suspension de la pièce (1) sur un arbre (7) dans un chevalet de chargement (8), la pièce (1) étant orientée verticalement,
- soumission de la pièce (1) à la chaleur pendant une durée souhaitée,
- refroidissement de la pièce (1) dans un fluide de refroidissement usuel et
- le cas échéant, recuit de la pièce (1).

8. Procédé selon la revendication 7, **caractérisé en ce que** l'arbre (7) est entraîné.

9. Utilisation d'un ou de plusieurs moyeux auxiliaires (6) pour le durcissement avec stabilité de forme de roues dentées (1) en position verticale dans un dispositif de chargement selon l'une des revendications 1 à 6.
